# EUROPEAN PATENT APPLICATION

(11) **EP 2 775 726 A1**
(43) Date of publication of application: **10.09.2014**
(21) Application number: 14155221.6
(22) Date of filing: 14.02.2014
(51) Int. Cl.: H04N 21/41, H04N 21/414, H04N 21/43, H04N 21/436, H04N 21/6587, H04N 21/8352, H04N 21/845

(54) **Method for displaying contents, method for providing contents, contents display device and contents providing device**

(30) Priority: 04.03.2013 KR 20130023012
(71) Applicant: Samsung Electronics Co., Ltd., Suwon-si Gyeonggi-do 443-742 (KR); University-Industry Cooperation Group of Kyung Hee University, Gyeonggi-do 446-701 (KR)
(72) Inventor: Jang, Yong-seok, Gyeonggi-do (KR); Kim, Kyu-heon, Seoul (KR); Park, Jung-wook, Gyeonggi-do (KR); Lee, Jae-jun, Gyeonggi-do (KR); Park, Hong-seok, Gyeonggi-do (KR); Park, Gwang-hoon, Gyeonggi-do (KR); Park, Gi-jun, Gyeonggi-do (KR); Suh, Doug-young, Gyeonggi-do (KR); Lee, Jang-won, Gyeonggi-do (KR)
(74) Representative: Instone, Terry

(57) **Abstract**

Methods and devices for displaying content are provided. A method for displaying content includes: receiving the content from a server and displaying the received content; and, in response to a request by an external device distinct from the server, transmitting display time information of the displayed content to the external device.

## Description

### BACKGROUND

### 1. Field

Apparatuses and methods consistent with exemplary embodiments relate to a contents display and more particularly, to a method for displaying contents, a method for providing contents, a contents display device, and a contents providing device which may perform synchronization between N-SCREEN devices and display contents on a plurality of display devices.

### 2. Description of the Related Art

With the development of new technologies and a variety of terminals, a user can now consume media contents, which were mostly centrally controlled at service providers, by selecting time, space, and a terminal according to a user preference.

Thanks to the above-mentioned development of media contents consumption, a plurality of media services has emerged. N-SCREEN, one of the services, enables sharing and executing of media contents by using plural media terminals, and is in the spotlight of consumers with its user-centered services.

N-SCREEN, which enables user-centered and convenient display of media contents, may become more popular as this service improves utilization and convenience of many terminals. As utilization rate of N-SCREEN has increased among users, contents providers, telecommunication companies, and terminal manufacturers also have shown a keen attention to this service, as this service may enhance growth potential.

An N-SCREEN service provides a service by dividing one media content into many pieces of media content called segments, storing the same at a server, and then sequentially providing the stored segments to a terminal. In this case, each terminal receives a segment of the media content from the server, decodes the segment, and displays the decoded segment.

In order to use the N-SCREEN service, a service that can connect many terminals is utilized. Thus, a specification regarding a method of how terminals can communicate with each other and how a service and a terminal communicate with each other is necessary.

Specifically, a user may want to continue to view a content displayed through a terminal with another mobile terminal or a stationary terminal. For example, when a smartphone user enters a home, the user may want to view the content he/she was viewing via a stationary terminal with a large screen such as a TV. Additionally, if a user was watching a movie through a TV at home but leave the home, the user may want to continue to watch the movie via a smartphone.

In this case, synchronization of timing of display should be performed between different display devices (terminals) to enable the user to view the content without being interrupted. A terminal which continuously displays the content should display the content so that a middle part of the content is not omitted, and that a part already viewed is displayed again.

Accordingly, when a plurality of display devices display the same content, a method for synchronizing display timing is beneficial.

### SUMMARY

According to the present invention there is provided an apparatus and method as set forth in the appended claims. Other features of the invention will be apparent from the dependent claims, and the description which follows.

Aspects of one or more exemplary embodiments provide an N-SCREEN service through a plurality of terminals under a media transmission environment for a user. When a media content is being consumed at a terminal, an exemplary embodiments displays the same media content sequentially at another terminal.

According to an aspect of an exemplary embodiment, there is provided a method for displaying the content, the method including: receiving the content from a server and displaying the received content; and in response to a request by an external device, transmitting display time information of the displayed content to the external device.

The display time information may include at least one of information to identify a current segment currently being displayed among segments of the provided content and system clock information.

The method further includes transmitting address information of the server.

The display time information may include at least one of binary information, image information, and Quick Response (QR) code information.

The method, in response to a predetermined time elapsing after the display time information is transmitted, may further include suspending display of the content.

According to an aspect of another exemplary embodiment, there is provided a method of displaying contents, the method including: requesting display time information on the content being displayed by an external device to the external device; in response to the requesting, receiving display time information on the content being displayed from the external device; transmitting the received display time information to a server; based on the transmitted display time information, receiving a segment after a current segment being displayed among segments of the content being displayed; and displaying the received segment.

The display time information may include at least one of segment identification information to identify the current segment currently being displayed among the segments of the content being displayed and system clock information of the external device.

The displaying may include: synchronizing a reference time according to reference time information of the external device; according to the segment identification information, determining a segment after the current segment by a predetermined number of segments; and displaying the determined segment at a clock corresponding to an offset value added to the synchronized reference time.

The method may further include receiving network address information of the server.

According to an aspect of another exemplary embodiment, there is provided a method for displaying content, the method including: providing the content to a first device; and in response to display time information of the content provided from a second device being received, transmitting a segment among segments of the received content after a current segment being displayed by the first device to the second device based on the received time information.

According to an aspect of another exemplary embodiment, there is provided a content display device, the device including: a communicator; a display configured to receive content from a server through the communicator and display the received content; and a controller which, in response to a request by an external device, is configured to transmit display time information of the received content to the external device.

The display time information may include at least one of segment identification information to identify a segment currently being displayed among segments of the received content and system clock information of the content display device.

The controller may be configured to control to further transmit address information of the server to the external device.

The time information may include at least one of binary information, image information, and QR code information.

The controller, in response to a predetermined time elapsing after the display time information is transmitted, may be configured to control to suspend display of the content.

According to an aspect of another exemplary embodiment, there is provided a content display device including: a display; a communicator configured to receive display time information of content being displayed from an external device and transmits the received display time information to a server; and a controller configured to control to receive a segment determined after a current segment currently being displayed among segments of the content being displayed and display the received segment based on the received display time information.

The display time information may include at least one of segment identification information to identify the current segment currently being displayed among the segments of the content being displayed and clock information of the external device.

The controller may be configured to control to synchronize a reference clock of the content display device according to reference clock information of the external device, according to the segment identification information, to determine a segment after the current segment by a predetermined number of segments, and to display the determined segment at a clock corresponding to an offset value added to the synchronized reference clock.

The controller may be configured to control to receive a network address information of the server.

According to an aspect of another exemplary embodiment, there is provided a content providing device including: a communicator configured to communicate with a first device and a second device; a storage configured to store content to be provided to the first device and the second device; and a controller configured to provide the stored content to the first device, and in response to display time information of the received content at the first device being received from the second device, to transmit a segment after a segment currently being displayed by the first device to the second device among segments of the content based on the received display time information.

According to exemplary embodiments, a user may view a media content which is transmitted to a media network sequentially, as the media content is synchronized at a plurality of terminals.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a view illustrating a concept map of synchronization of a content display;
FIG. 2 is a view illustrating a flowchart of a method for content display according to an exemplary embodiment;
FIG. 3 is a view illustrating a flowchart of a method for content display according to another exemplary embodiment;
FIG. 4 is a view illustrating a flowchart of a method for content display according to an exemplary embodiment;
FIG. 5 is a view illustrating a flowchart of a method for content display according to another exemplary embodiment;
FIG. 6 is a view illustrating a block diagram which illustrates the configuration of a content display device according to an exemplary embodiment;
FIG. 7 is a view illustrating a block diagram which illustrates the configuration of a content display device according to another exemplary embodiment;
FIG. 8 is a view illustrating a block diagram which illustrates the configuration of a server according to an exemplary embodiment;
FIG. 9 is a view illustrating a concept map which indicates synchronization among terminals by using a Quick Response (QR) code according to another exemplary embodiment;
FIG. 10 is a view illustrating a concept map which illustrates a method for sequentially displaying a media content among terminals through authentication by users; and
FIG. 11 is a view illustrating a flowchart which illustrates a method for displaying content according to an exemplary embodiment.

### DETAILED DESCRIPTION OF EXEMPLARY EMBODIMENTS

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail. Furthermore, it is understood that, herein, expressions such as "at least one of," when preceding a list of elements, modify the entire list of elements and do not modify the individual elements of the list.

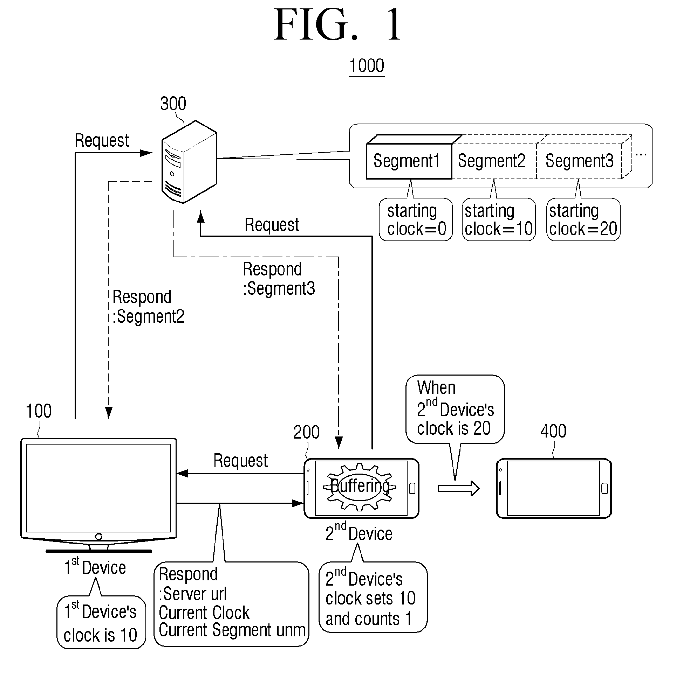

FIG. 1 is a view illustrating a concept map which illustrates a method for synchronizing an N-SCREEN service by sharing media transmission information from a terminal to certain terminals.

Referring to FIG. 1, a first terminal 100 connects to a server 300 and requests a segment and additional information used for displaying. The server 300 sequentially provides the requested segment and additional information to the first terminal 100. At this time, after receiving the segment, the first terminal 100 decodes the segment, operates a reference clock, and confirms the same. According to the point of time of decoding and displaying of the segment, decoding and displaying are performed. Specifically, as shown in FIG. 1, the first terminal 100 receives segment 2, in accordance with the terminal's own time information, decodes segment 2 at the predetermined time from the time when segment 1 is displayed, and displays the same.

As such, during displaying of the media content by the first terminal 100, in order to sequentially view the media content consumed by the first terminal 100 using the second terminal 200, the media content currently being displayed by the first terminal 100 is requested from the first terminal 100.

At this time, the first terminal 100 provides location information (e.g., uniform resource locator (URL)) of the server 300 from which content that is currently being displayed is received, media content information, a reference clock value which can be shared between terminals, and a location of the segment currently being consumed. In this case, the reference clock which can be shared between terminals is created by referring to an internal reference clock value of the first terminal 100.

Information used for the N-SCREEN service between terminals may be transmitted in a form of binary information, document information, and image information, using various transmission networks such as radio frequency (RF), Internet Protocol (IP), Bluetooth, Near Field Communication, Zigbee, etc.

In the second terminal 200, the location of the server 300 or the media content is determined according to the location information of the server 300 provided by the first terminal 100 or the media content information, and a segment and additional information used for display are requested. In addition, the second terminal 200 sets its clock value for media content display to be the same as the value of the first terminal 100. When the first terminal 100 consumes the second segment 2, a segment (segment 3) is received, and the time for decoding (clock 20) is reached, the corresponding segment is decoded and displayed, and then terminals 100 and 200 are synchronized to each other.

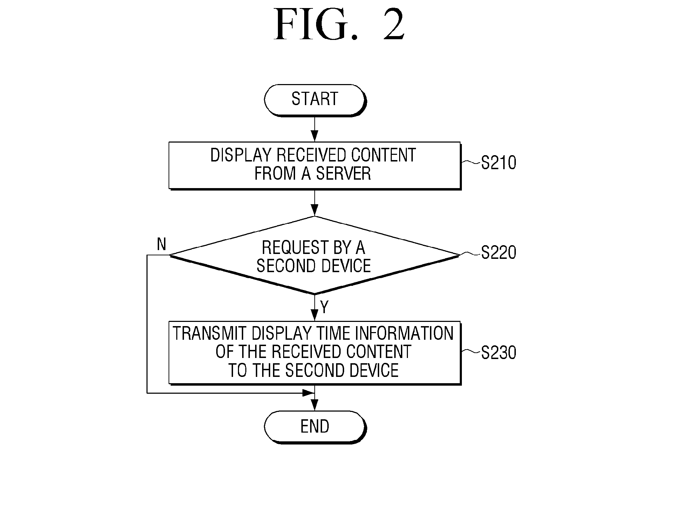

FIG. 2 is a view illustrating a flowchart of a method for content display according to an exemplary embodiment.

The content display method of FIG. 2 indicates operations of the first terminal 100 in the above-described exemplary embodiment. Referring to FIG. 2, the method for displaying content according to an exemplary embodiment includes receiving the content from a server and displaying the content (operation S210), receiving a request from the second device (corresponding to another terminal 200 of the above-described exemplary embodiment) (operation S220), and transmitting display time information of the content to the second device (operation S230).

In operation S210, the first device receives content from a server and displays the content. The first device receives a segment of the content sequentially through a network. The first device may store a segment of the received content in a storage unit (e.g., storage), and in this case, the storage unit may be a buffer which temporarily stores the segment of the received content. The first device decodes the received segment and displays the segment on a display unit (e.g., display). The first device may display the received content without buffering of display.

In order to achieve this, according to an exemplary embodiment, when bandwidth of a network is sufficient, a quantity of the received content at a predetermined time is made to be larger than the displayed content at the same predetermined time. In this case, the second device may store the received segment at a storage unit of sufficient space. However, when a size of the segment of the content is large, a large quantity can be received at a time, which may cause temporary network failure and buffering of display can occur. On the other hand, when receiving several small segments at a time, more operations of a communication module may occur, and thus power consumption increases. In this case, even though there is temporary network failure, buffering of display is reduced.

As another method, small segments can be received continuously. In this case, similar to the above-mentioned method, there are more operations of a communication module, and if there is temporary network failure, there is less buffering of display.

As still another method, a plurality of communication modules can be equipped. This method also can prevent buffering of play, but it may cause complicated hardware configuration and a rise in manufacturing cost.

In operation S220, the second device requests information on content display time from the first device, and the first device receives the request. When requested by the second device, authentication of the second device may be performed. When authentication of the second device is not necessary or is already completed, the first device transmits content display time information to the second device. The second device displays the received content from the server using the received time information. Similar to the afore-described exemplary embodiment, the second device starts display sequentially from the part which was displayed by the first device. In this case, the first device may, although not necessarily, suspend display when the second device starts the content display. As a result, the first device may display the content in the same manner as the second device, and when a plurality of users are viewing a content via a terminal, the plurality of users can then sequentially view the same content via each of plural terminals.

Herein, content display time information includes at least one of system clock information and segment identification information to identify a segment currently being displayed among segments which constitute the content being displayed. For example, in the exemplary embodiment of FIG. 1, the time information can be identification information of segment 1 when the first device is currently displaying segment 1. In addition, system clock information of the first device can be included. System clock information of the first device may include a system clock reference value and an offset value at the time when each segment is being displayed. The second device may receive system clock reference value and set the time after the predetermined time is passed as the system clock reference value.

In this case, time information may be one of binary information, image information, or Quick Response (QR) code information. QR code has a two-dimensional configuration which utilizes width and length and records up to 7,089 numbers, 4,296 letters, and 1,817 Chinese letters. QR code can be used as an efficient tool that can deliver a great amount of information to active users who want to obtain two-dimensional information related to an image.

In addition, though not illustrated in drawings, the method for displaying content may further include transmitting address information (not illustrated) of the server. The second device may not know an address of the server from which the content is provided. In this case, the address information may be received from the first device. The server address may be an IP address, radio frequency information, etc. When the second device receives a radio frequency of a server, the second device tunes the corresponding frequency and receives the content.

In the method for displaying the content, the first device suspends displaying the received content when a predetermined time is passed after the display time information is transmitted. While a user is viewing the content via the first device and wants to view the content via the second device, if the second device sequentially displays the content without buffering, the first device no longer needs to display the content. At this time, if it may take time for the second device to receive the content segment after a certain point of time, display of the segment before being displayed by the second device may be done by the first device.

Meanwhile, according to another exemplary embodiment, if a plurality of users are viewing a content via a terminal and want to view the content sequentially through each of plural terminals, the first device should keep providing the content and will not suspend displaying the content.

Hereinbelow, the above-described operations of the second device are explained.

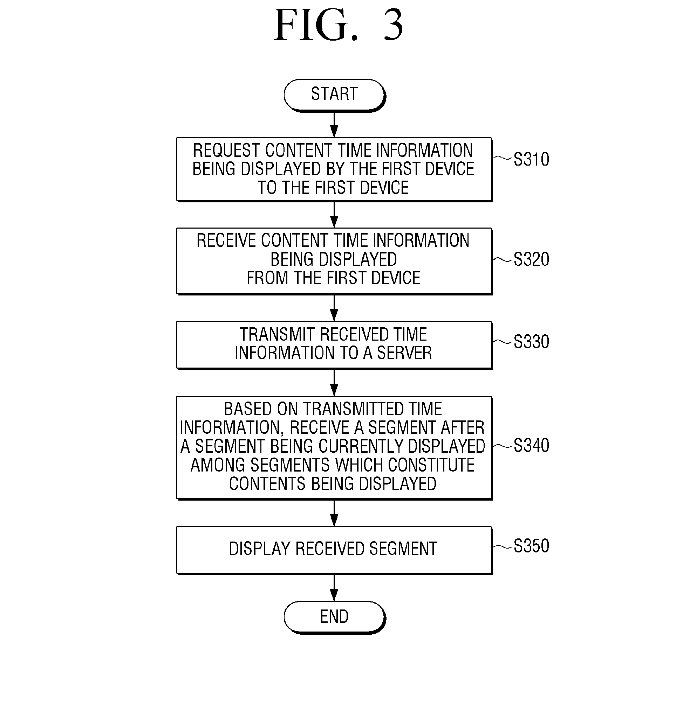

FIG. 3 is a view illustrating a flowchart of a method for content display according to another exemplary embodiment.

The method for displaying the content of FIG. 3 indicates operations of another terminal 200 of the above-described exemplary embodiment.

Referring to FIG. 3, according to an exemplary embodiment, the method for displaying a content includes requesting content time information from the first device (operation S310), receiving time information from the first device (operation S320), transmitting the received time information to a server (operation S330), receiving a segment after a segment currently being displayed based on the received time information (operation S340), and displaying the received segment S350.

In operation S310, the second device requests, from the first device, time information of the content currently being displayed by the first device. At this time, the time information may include at least one of clock information and segment identification information to identify a segment currently being displayed among segments which constitute the content being displayed. For example, in an exemplary embodiment of FIG. 1, the time information, when the first device is currently displaying segment 1, can be identification information of segment 1. In addition, the time information can include system clock information of the first device. The system clock information of the first device may include the system clock reference value of the first device and the offset value at the time when each segment is displayed. The second device may receive the system clock reference value and set the point of time when the predetermined time is passed as the system clock reference value.

In operation S320, the second device receives, from the first device, the time information of the content currently being displayed. Operation S320 corresponds to operation S220.

In operation S330, the second device transmits received time information to a server. At this time, the received time information includes identification information of a segment. In an exemplary embodiment of FIG. 1, if a segment currently being displayed by the first device is segment 1, the second device may transmit identification information of segment 1. According to another exemplary embodiment, the second device will display a later segment, e.g., segment 2 or segment 3, and thus may transmit identification information of a segment after the predetermined point of time of segment 1. In this case, delay due to transmission of information should be considered.

In operation S340, the second device receives a segment from a server. Specifically, the second device receives a segment after a segment currently being displayed among segments which constitute the content being displayed. The second device sequentially receives a segment after a segment displayed by the first device. Meanwhile, the second device may not display all the received segments. For example, when the second device received segments 2 and 3, but the first device displays segment 2, the second device may not display segment 2, and therefore starts with a display of segment 3.

In operation S350, the second device displays the received segment.

The second device, like the first device, receives a segment of a content sequentially through a network. The first device may store a segment of the received content in a storage unit, and in this case, the storage unit may be a buffer which temporarily stores the segment of the received content. The second device decodes the received segment and displays the segment on a display unit. The second device may display the received content without buffering of display.

To achieve this, according to an exemplary embodiment, when bandwidth of a network is sufficient, a quantity of the received content at a predetermined time is made to be larger than the displayed content at the same predetermined time. In this case, the first device may store the received segment at a storage unit of sufficient space. However, when a size of the segment of the content is large, a large quantity can be received at a time, which may cause temporary network failure and buffering of display can occur. On the other hand, when receiving several small segments at a time, more operations of a communication module may occur, and thus power consumption increases. In this case, even though there is temporary network failure, buffering of display is reduced.

As another method, small segments can be received continuously. In this case, similar to the above-mentioned method, there are more operations of a communication module, and if there is temporary network failure, there is less buffering of display.

As still another method, a plurality of communication modules can be equipped. This method also can prevent buffering of play, but it may cause complicated hardware configuration and a rise in manufacturing cost.

The displaying (operation S350) may be performed using the method described below.

First, a reference clock is synchronized in accordance with reference clock information of the first device. Synchronization of the reference clock is a process in which the starting point of the reference clock of the first device is coincided with that of the second device. Herein, the predetermined time is set in consideration of communication bandwidth and errors in transmission time.

In addition, considering the segment identification information, a segment after the predetermined number of segments is determined from the segment currently being displayed. For example, when the first device is displaying segment 1, the second device may decide to receive from segment 4 in consideration of transmission time, etc.

The first device displays the predetermined segment at a clock in which an offset value is added to the synchronized reference clock. The offset value is transmitted from the first device, and can be determined in consideration of the characteristics of the second device.

In addition, the method for displaying content by the second device may further include receiving address information of the server on a network.

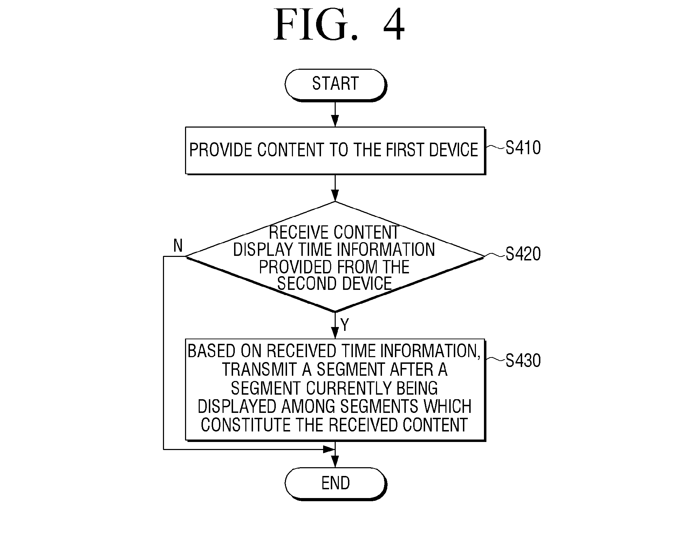

FIG. 4 is a view illustrating a flowchart of a method for content display according to an exemplary embodiment.

Referring to FIG. 4, the method for providing content according to an exemplary embodiment includes providing the content to the first device (operation S410), receiving display time information of the received content from the second device (operation S420), and transmitting, based on the received time information, a segment after the segments currently being displayed by the first device to the second device among the segments which constitute the received content. As each step was already described in the above exemplary embodiments, it will not be further explained.

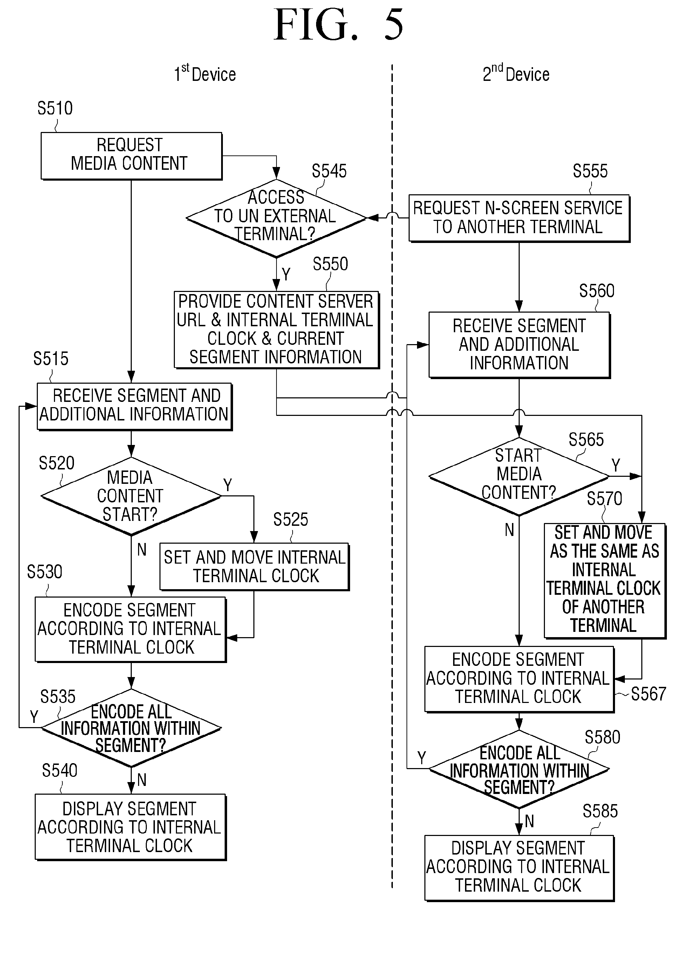

FIG. 5 is a view illustrating a flowchart which describes the process in which the next segment display time is reached by setting reference time value shared between terminals or sharing contents information as explained with reference to FIGS. 2 through 4, and then each terminal starts to consume corresponding segments.

As each step of FIG. 5 was described above, further explanation will be omitted.

Hereinbelow, the configuration of the first device and the second device(content display device) are explained.

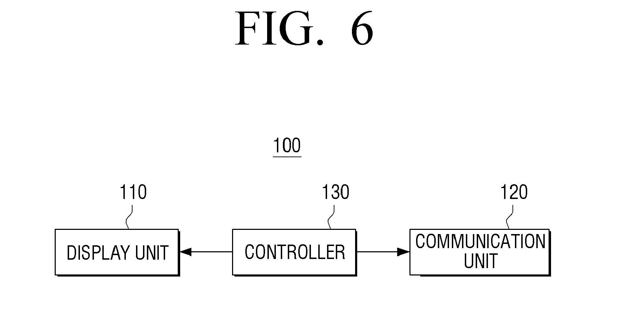

FIG. 6 is a view illustrating a block diagram which illustrates the configuration of a content display device 100 according to an exemplary embodiment.

Referring to FIG. 6, a content display device 100 includes a display unit 110 (e.g., display), a communication unit 120 (e.g., communicator), and a controller 130 according to an exemplary embodiment.

A display unit 110 has the configuration of receiving a content from a server 300 through a communication unit 120, and displays the content. A display unit 110 can be embodied to various display technologies including an Organic Light Emitting Diode (OLED) display, a Liquid Crystal Display (LCD) panel, a Plasma Display Panel (PDP), a Vacuum Fluorescent Display (VFD), a Field Emission Display (FED), and an Electro Luminescence Display (ELD). Furthermore, the display unit 110 may be an emitting light type or a reflective display (e.g., E-ink, P-ink, Photonic Crystal, etc). In addition, the display unit 110 can be embodied as a flexible display, a transparent display, etc.

Moreover, although not illustrated, various configurations for output of content such as a signal processing unit (e.g., signal processor), a demultiplexer, a speaker, etc., may be included.

A content display device 100 includes the configuration to output an audio signal along with a display unit 110.

A communication unit 120 is the configuration to receive and transmit a server 300 or the second device 200 and data. It is general that a content display device 100 is located distant from a server 300, which can be connected through network. In this case, information can be transmitted via TCP/IP. However, when connected with a small size network such as a home network, it can be embodied as a bus topology structure.

A communication unit 120, for receiving/transmitting data with the second device 200, can be embodied as various short distance communication technologies. For example, it can follow Wi-Fi communication specification. In this case, a communication unit 120 includes Wi-Fi module.

Wi-Fi module performs short distance communication, following IEEE 802.11 technology specification. According to IEEE 802.11 technology specification, wireless communication technology in the spread spectrum type called single carrier Single Carrier Direct Sequence Spread Spectrum (DSSS) and wireless communication technology in the orthogonal frequency division multiplexing type called multi carrier Multi Carrier Orthogonal Frequency Multiplexing (OFDM) are used. In other words, by frequency spread, data is transmitted by tuning of noise signal, and using a plurality of orthogonal frequency, mass data is transmitted.

As another exemplary embodiment, a communication unit 120 can be embodied as various mobile communication technologies. That is, a cellular communication module which enables data receiving/transmitting by using the existing wireless telephone network can be included.

For example, 3rd generation (3G) mobile communication technology can be applied. In other words, at least one of Wideband CDMA (WCDMA), High Speed Downlink Packet Access (HSDPA), High Speed Uplink Packet Access (HSUPA), and High Speed Packet Access (HSPA) can be applied. Unlike, 4th generation (4G) mobile communication technology can also be applied. 2.3GHz (portable internet) Mobile WiMAX or WiBro are internet technologies which are gathering attention these days, as they can be used during movement in a high speed. In addition, 4th generation Long Term Evolution (LTE) technology can be applied. LTE is the WCDMA's extensive technology, which is based on Orthogonal Frequency Division Multiple Access (OFDMA)Multiple-Input Multiple-Output (MIMO) (e.g., multiple antenna).

As described above, as to the communication unit 120 of the content display device 100, WiMAX, WIFI, 3G, LTE with wide bandwidth and higher efficiency can be utilized, but it does not mean that other short distance communication technologies are not applied. That is, the communication unit 120 may include at least one of other short distance communication module such as Bluetooth module, IrDA(infrared data association) module, NFC(Near Field Communication) module, and Zigbee module, and wireless LAN module.

Likewise, the communication unit 120 can be embodied based on above-described various communication technologies, and when necessary, other communication technologies not mentioned in this application can be applied.

The controller 130, when requested by the second device 200, controls to transmit the display time information of the content provided to the second device 200. The movements of the controller 130 are the same as the method described before, further explanation will be omitted.

Meanwhile, the time information comprises at least one of segment identification information to identify a segment currently being displayed among segments which constitute the content being displayed and clock information. The time information may be one of binary information, image information, and QR code information.

In addition, the controller 130 may control to further transmit the address information of the server to the external device.

The controller 130, when a predetermined time is elapsed after the display time information is transmitted, may control to suspend display of the content.

Detailed operations of the controller 130 are as described in the above-described exemplary embodiment of the content display method.

The controller 130 includes at least one of a hardware configuration such as a central processing unit (CPU) and cash memory, an operating system (OS), and a software configuration to perform specific purposes. According to system clock, control order for movement of configuration factors of the first device 100 is read by a memory, and according to the read control memory, electrical signal is generated, which moves each configuration factor of hardware.

The above-mentioned first device 100 can be embodied as various devices equipped with display devices such as computer, digital versatile disc (DVD) player, TV, cell phone, personal digital assistant (PDA), notebook personal computer (PC), monitor, tablet PC, e-book, e-frame, kiosk, etc.

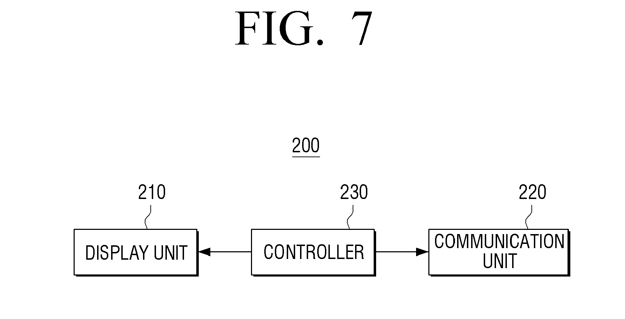

FIG. 7 is a view illustrating a block diagram which illustrates the content display device 200(the second device) according to an exemplary embodiment.

Referring to FIG. 7, the content display device 200 includes the display unit 210, the communication unit 220, and the controller 230.

The display unit 210 has the configuration to receive the content from the server 300 and display the content. The display unit 210 has the same configuration as the above-described display unit 110 of the first device 100, further explanation will be omitted.

The communication unit 220 receives time information of the content being displayed from the first device 100 and transmits the received time information to the server 300. In addition, the communication unit receives the segment of the comment from the server 300. Similar to the first device, it is general that the second device 200(content display device) is located distant from the server 300, and the second device can be connected through network. In this case, information can be transmitted by TCP/IP. However, when connected with a small size network such as home network, it can be embodied as bus topology structure.

The communication unit 220 also, similar to the communication unit 120, can be embodied as various short distance communication technology means.

The controller 230 which controls to receive a segment determined after a segment currently being displayed among segments which constitute the content being displayed and display the received segment based on the received time information.

In this case, time information includes at least one of segment identification information to identify a segment currently being displayed among segments which constitute the content being displayed and clock information of the external device.

The controller 230 may control to synchronize a reference clock of the content display device according to reference clock information of the external device, in consideration of the segment identification information, determines a segment after a predetermined number of segments being displayed, and displays the predetermined segment at a clock where an offset value is added to the synchronized reference clock of a content display device 200.

The controller 230 may control to receive network address information on the server 300.

Detailed movements of the controller 230 are as described in an exemplary embodiment of the content display method.

The controller 230 includes hardware configuration such as CPU and cash memory, OS, and software configuration to perform specific purposes. According to system clock, control order for movement of configuration factors of the second device 200 is read by a memory, and according to the read control memory, electrical signal is generated, which moves each configuration factor of hardware.

The above-mentioned second device 200 can be embodied as various devices equipped with display devices such as computer, DVD player, TV, cell phone, PDA, notebook PC, monitor, tablet PC, e-book, e-frame, and kiosk.

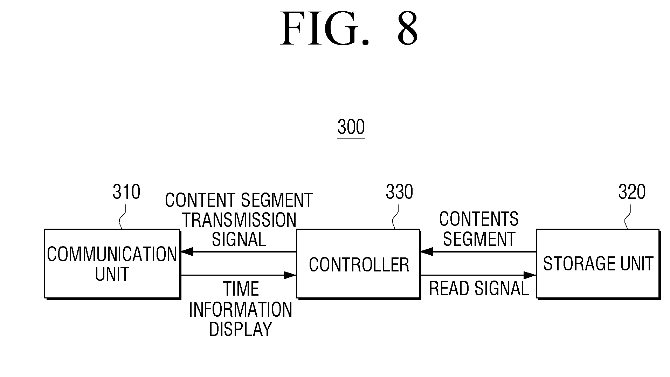

FIG. 8 is a view illustrating a block diagram which illustrates the configuration of the server 300 according to an exemplary embodiment.

Referring to FIG. 8, according to an exemplary embodiment, the server 300 includes the communication unit 310, the storage unit 320, and the controller 330.

The communication unit 310 receives and transmits data with the first device and the second device. The communication unit 310, through network, provides the content segment to the first device 100 and receives content time information from the second device 200. In addition, the communication unit 310 provides content segment to the second device 200.

The storage unit 320 stores the content to be provided to the first device 100 and the second device 200. The storage unit 320 is composed of database based on metadata and stores various contents by dividing them into segments. When requested by an external device, content segment is read by the storage unit.

The controller 330 provides the stored content to the first device 100, when display time information of the first device 100 provided by the second device 200 is received, and controls to transmit a segment among segments which constitute the received content after a segment being displayed by the first device 100 to the second device 200 on the received time information.

Detailed movements of the controller 330 are as described in the above-described exemplary embodiment of the content display method.

The controller 330 includes hardware configuration such as CPU and cash memory, OS, and software configuration to perform specific purposes. According to system clock, control order for movement of configuration factors of the first device 100 is read by a memory, and according to the read control memory, electrical signal is generated, which moves each configuration factor of hardware.

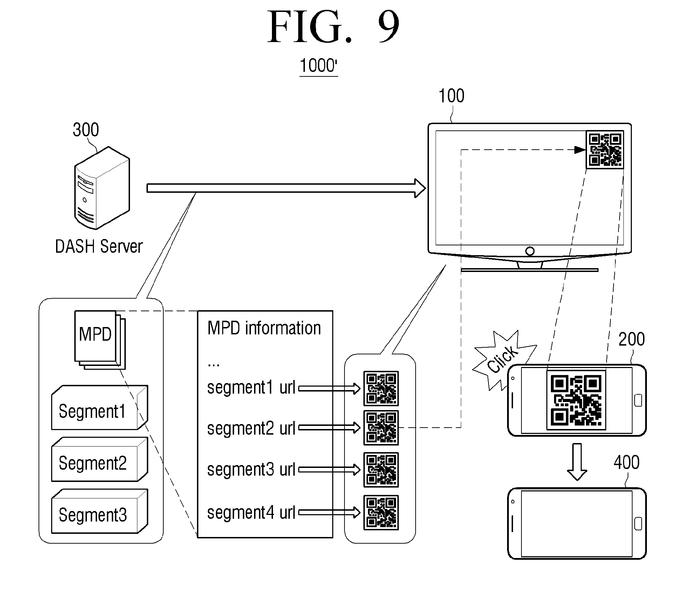

FIG. 9 is a view illustrating a concept map which indicates synchronization among terminals by using a QR code according to another exemplary embodiment.

Referring to FIG. 9, the first terminal 100 receives MPD information from the server and analyzes MPD information. The MPD information includes initialization information of media display and URL information of each segment. The first terminal 100 generates OR code image on each segment URL and stores the image on a memory.

If another terminal 200 requests N-SCREEN to the first terminal 100, the first terminal 100 outputs QR code which indicates segment URL being consumed.

Another terminal 200 stores output QR code by capturing or by other means and analyzes the QR code. By this, location of the server 300 and segment of a program being displayed and N-SCREEN service can be executed. This service can be provided to another terminal 400.

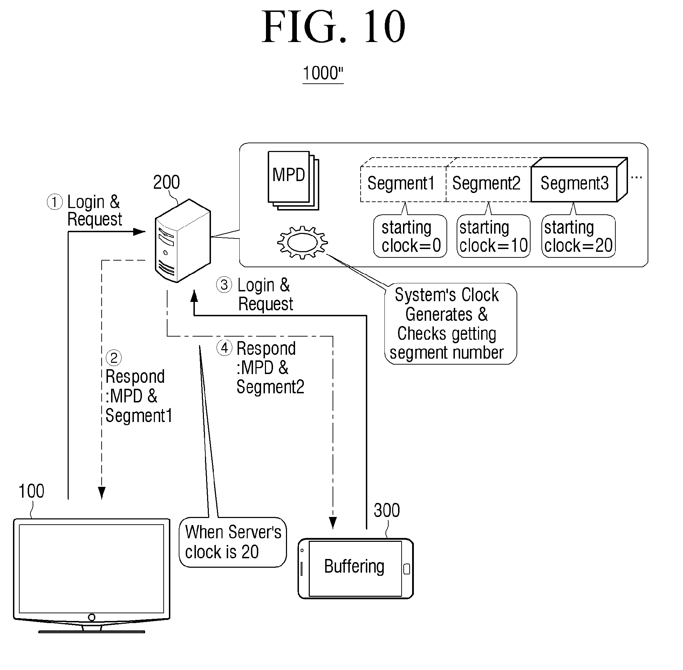

FIG. 10 is a view illustrating the method for providing N-SCREEN service which can sequentially display media content of each terminal by providing information required to display media content consumed by users on the server 300 to each terminal.

Referring to FIG. 10, a user on the first terminal 100 requests a specific media content after user authentication on the server 300. The server 300 operates reference clock required for displaying media content requested by the user and sequentially provides additional information and segment required for display at the same time.

While the first terminal 100 is displaying media content received from the server 300, the same user authentication is performed at another terminal 200 and requests displaying media content sequentially. In this case, the server 300 identifies display information of reference clock information or media content which the first terminal 100 is operating.

In addition, when the point of time that a segment is to be displayed after consumption of the first terminal 100 is reached, the server 300 provides corresponding segment and additional information required for display to another terminal 200, and synchronization on one content between different terminals (100, 200).

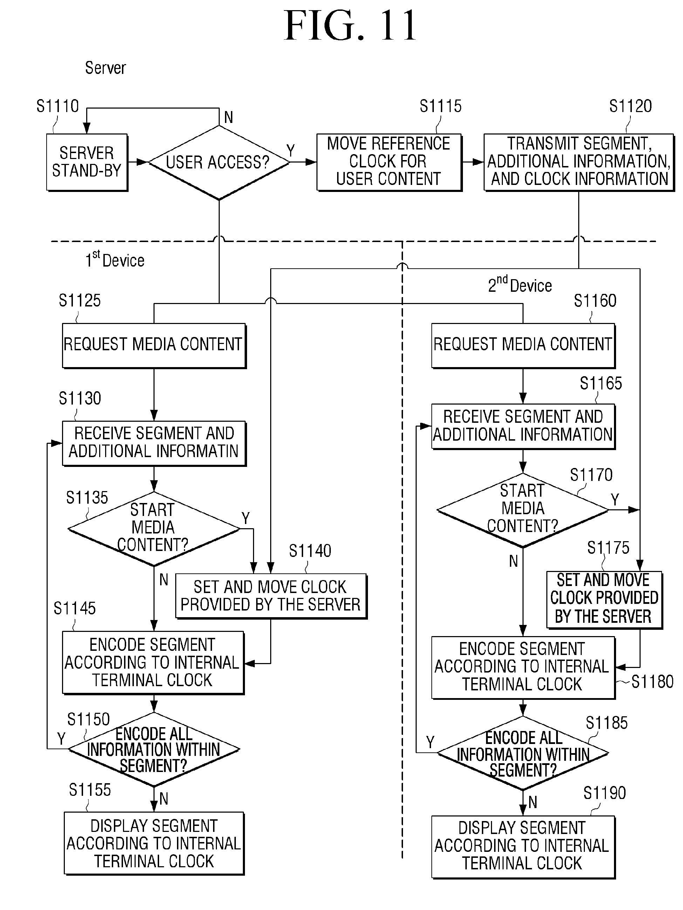

FIG. 11 is a view illustrating a flowchart on the process which unifies point of time of displaying each segment while content reference time information is provided to a plurality of terminals from the server shown in FIG. 10, which sets the same time frame among each terminal. As each step of FIG. 11 is explained in FIG. 10, repetitive explanation will be omitted.

According to exemplary embodiments, a user can sequentially view content, as media contents delivered to media transmission network are synchronized among a plurality of terminals.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, it is understood that in exemplary embodiments, one or more units of the above-described apparatuses, servers, terminals, etc., can include circuitry, a processor, a microprocessor, etc., and may execute a computer program stored in a computer-readable medium.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A method for displaying content, the method comprising:
receiving the content from a server and displaying the received content; and
when requested by an external device, transmitting display time information of the content to the external device.

2. The method of claim 1, wherein the display time information comprises at least one of system clock information and information to identify a segment currently being displayed among segments which constitute the provided content.

3. The method of claim 1 or 2, further comprising:
transmitting address information on the server.

4. The method of claim 1 to 3, wherein the time information is one of binary information, image information, and Quick Response (QR) code information.

5. The method of claim 1, further comprising:
when a predetermined time is elapsed after the display time information is transmitted, suspending the displaying of the content.

6. A method for displaying a content, the method comprising:
requesting, from an external device, display time information on the content being displayed by the external device;
in response to the requesting, receiving the display time information on the content being displayed from the external device;
transmitting the received display time information to a server;
based on the transmitted display time information, receiving a segment after a current segment being displayed among segments constituting the content being displayed; and
displaying the received segment.

7. The method of claim 6, wherein the display time information comprises at least one of system clock information of the external device and segment identification information to identify the current segment currently being displayed among the segments which constitute the content being displayed and.

8. The method of claim 7, wherein the displaying comprises:
synchronizing a reference clock according to reference clock information of the external device;
in consideration of the segment identification information, determining a segment after the current segment by a predetermined number of segments; and
displaying the determined segment at a clock corresponding to an offset value added to the synchronized reference clock.

9. The method of claim 6 to 8, further comprising:
receiving network address information on the server.

10. A content display device, the device comprising:
a communication unit;
a display unit which receives content from a server through the communication unit and displays the received content; and
a controller which, when requested by an external device, controls to transmit display time information of the received content to the external device.

11. The device of claim 10, wherein the display time information comprises at least one of system clock information of the content display device and segment identification information to identify a segment currently being displayed among segments which constitute the received content.

12. The device of claim 10 or 11, wherein the controller controls to further transmit address information on the server to the external device.

13. The device of claim 10, wherein the time information is one of binary information, image information, and QR code information.

14. The device of claim 10 to 13, wherein the controller, when a predetermined time is elapsed after the display time information is transmitted, controls to suspend display of the content.
